# EUROPEAN PATENT APPLICATION

(11) **EP 3 279 274 A1**
(43) Date of publication of application: **07.02.2018**
(21) Application number: 16182115.2
(22) Date of filing: 31.07.2016
(51) Int. Cl.: C09D 5/44

(54) **CATIONIC WATER-DILUTABLE BINDERS**

(71) Applicant: ALLNEX AUSTRIA GmbH, 8402 Werndorf (AT)
(72) Inventor: FEOLA, Roland, Dr., 8045 GRAZ (AT); PAAR, Willi, Dr., 8010 GRAZ (AT); GMOSER, Johann, 8292 NEUDAU (AT); CVETKO, Norbert, 8010 GRAZ (AT)
(74) Representative: Deckers, Hellmuth Alexander

(57) **Abstract**

Summary

The invention relates to cationic water-dilutable binders comprising a water-soluble bismuth salt or a water-soluble bismuth chelate complex, a urethane additive and a chain-extended epoxy-amine adductmade from epoxide compounds, amidoamines, amines having at least two amino groups, amines having at least one secondary amino group, amines having at least one tertiary, and at least one primary amino group, fatty acids, and phenolic compounds having at least two phenolic hydroxyl groups, a process for their preparation, and a method of use thereof to form paints.

## Description

### Field of the Invention

The invention relates to cationic water-dilutable binders, to a process of production thereof, and to a method of use of these cationic water-dilutable binders for the preparation of paints.

### Background of the Invention

Cathodic electrodeposition, also referred to as "CED", is an accepted and efficient way to provide substrates of base metals with a protective film layer in order to prevent corrosion. These binders usually comprise a film-forming resin based on epoxide resin-amine adducts or acrylic resins having amino groups that can be dispersed in water upon neutralisation with an acid, and forms cations usually based on organically substituted ammonium structures. These cations are deposited on conductive layers that form the cathode of an electrochemical system in a bath containing this cathode metal substrates, an anode, and a bath filled with an aqueous dispersion of the binder, and optionally, pigments and fillers that are admixed to the binder in the form of a pigmented paste, are discharged on this cathode, and build a layer that is subsequently, after rinsing the surface to remove residues of the bath liquid, baked to crosslink the deposited paint film. This film usually has a layer thickness of from 0.015 mm to 0.035 mm. Commonly used crosslinkers include blocked, or capped, isocyanates that are uncapped by the action of heat (up to 185 °C), to split off the blocking agent, and free the isocyanate functional groups of the crosslinker that can then react with hydroxyl groups or amino groups present in the binder to form the cured paint layer. Common blocking agents are volatile organic compounds having functional groups that reversibly add to an isocyanate group under formation of a urethane or urea group, such as hydroxy-functional compounds which may be phenols, oximes, aliphatic alcohols, or partial esters of multivalent alcohols, amine-functional compounds such as aliphatic amines, mixed aromatic-aliphatic amines, lactams, pyrazoles, and also C-H acidic compounds such as malonates. Due to the release of these blocking agents during curing, a loss in mass is observed, referred to as "stoving loss", which also is frequently manifested in the form of bubbles that may be formed in the paint layer during curing if the gaseous blocking agents cannot escape from the paint film due to formation of a less permeable surface of the paint film. Moreover, a substantial amount of energy is used to heat the substrate to a temperature where the blocking agent is cleaved from the blocked isocyanate. Lastly, the gaseous blocking agents which are often irritant or even toxic, have to be collected and removed from the exhaust air of the baking ovens by appropriate treatment such as incineration which also consumes energy.

In WO 2015/055 804 A1, a cationic water-dilutable binder has been provided that canbe applied to a conductive substrate by the method of cathodic electrodeposition, and which avoids the disadvantages as mentioned hereinabove. WO 2015/055 805 A1 relates to a process to coat conductive substrates by the method of cathodic electrodeposition, followed by removal of the coated substrate, rinsing or otherwise cleaning the surface, and subjecting the coated substrate to a drying step at a temperature of from ambient temperature (25 °C) up to 120 °C, optionally followed by coating the dried coated substrate with at least one further coating layer. While these coatings perform well on zinc phosphated steel, problems with the surface quality have been found with bare steel as substrate. "Micro pin-holes" are formed, depending on coating conditions like deposition-voltage, bath temperature, use of solvents, which are not found in visual inspection, but can give rise to corrosion when the coated item is subjected to a corrosive environment which is simulated by salt-spray test and humidity chamber test in test laboratories. Another macroscopic phenomenon on the surface are deposition failures like "swirls", i. e., inhomogeneous film building caused mainly by turbulences in the dip bath due to stirring, which may lead also to a poor, inhomogeneous surface of a coating layers above the electrodeposited layer.

It is therefore an object of this invention to improve the quality and corrosion resistance of bare steel coated with the cationic water-dilutable binder described in WO 2015/055 804 A1, and in WO 2015/055 805 A1.

### Summary of the Invention

A cationic water-dilutable binder comprising a urethane additive has been provided by this invention that can be applied to a conductive substrate by the method of cathodic electrodeposition which binder crosslinks physically, i. e. without addition of a chemical substance, referred to as crosslinker, which crosslinker reacts with a resinous binder in a polycondensation or polyaddition reaction, or initiates a polymerisation of polymerisable, usually olefinically unsaturated, resinous binder.

This cationic water-dilutable binder comprises a chain-extended epoxy-amine adduct resin **EA** and a water-soluble bismuth salt or chelate complex, both individually, or together, referred to as "**B**", both dispersed in water, and additionally, a urethane additive **U**. Preferably, this bismuth salt or chelate **B** is present in an amount such that the amount of substance *n*(Bi) of elemental bismuth, divided by the mass *m*(R) of resin solids present in the dispersion is from 2 mmol/kg to 1000 mmol/kg, preferably from 5 mmol/kg to 500 mmol/kg, and with particular preference, from 10 mmol/kg to 300 mmol/kg.

### General Composition and Process

The cationic water-dilutable binders of this invention comprise a water-soluble bismuth salt or chelate complex, both individually, or together, referred to as "**B**", comprising bismuth ions and ions of an organic acid-functional moiety which is preferably able to form a chelate complex with bismuth, a chain-extended epoxy-amine adduct **EA**, and a urethane additive **U**, which has at least one urethane group in its molecule, and optionally, at least one active hydrogen-containing functional group selected from the group consisting of hydroxyl groups and carboxyl groups,
wherein the chain-extended epoxy-amine adduct **EA** optionally comprises moieties derived from epoxide compounds **E1** having on average at least one, and less than two, epoxide groups per molecule, and
wherein the chain-extended epoxy-amine adduct **EA** mandatorily comprises moieties derived from
- epoxide compounds **E2** having at least two epoxide groups per molecule,
- low molar mass epoxide compounds **E3** having two epoxide groups per molecule, and a molar mass of from 170 g/mol to 800 g/mol, and one or more of
- amidoamines **A41** having at least one amide group and at least one amino group, made from amines **A1** having at least two amino groups per molecule, and from three to twenty carbon atoms, selected from the group consisting of at least two primary amino groups per molecule, at least one primary and at least one secondary amino group per molecule, and at least two secondary amino groups per molecule, and a fatty acid **A4** which has from six to thirty carbon atoms and optionally, at least one olefinic unsaturation per molecule,
- amines **A1** having at least two amino groups per molecule, and from three to twenty carbon atoms, selected from the group consisting of at least two primary amino groups per molecule, at least one primary and at least one secondary amino group per molecule, and at least two secondary amino groups per molecule,
- amines **A2** which have from three to twenty carbon atoms and at least one secondary amino group per molecule, and optionally, at least one further reactive group which are preferably hydroxyl groups,
- amines **A3** having from four to twenty carbon atoms and at least one tertiary, and at least one primary amino group per molecule,
- fatty acids **A4** having from six to thirty carbon atoms, and one carboxylic acid group, or mixtures of two or more of such fatty acids, whereto optionally, an amount of up to 60 % of the mass of fatty acids **A4**, of a dicarboxylic or higher functional acid **A4**' may be added, which higher functional acids **A4**' are preferentially dimeric fatty acids, and
- phenolic compounds **A5** having from six to twenty carbon atoms and at least two phenolic hydroxyl groups.

This epoxy-amine adduct is preferably made in a process wherein
- in step a, a mixture **M1** is prepared from one or more of **A41**, **A1, A2**, **A3**, **A4**, and A5,
- in an optional step b, the mixture **M1** is reacted with an epoxide compound **E1** to reduce the number of epoxide-reactive groups to between 50 % and 90 % of the number of such groups in the mixture **M1** before this reaction step, to yield a mixture **M2**
- in an optional step c, at least one of **A1, A2**, **A3**, **A4**, and **A5** are added to the mixture **M1** of step a, or to the mixture **M2** of step b, to yield a mixture **M3**,
- in step d, the mixture **M1** of preceding step a, or the mixture **M2** of preceding step b, or the mixture **M3** of preceding step c, is diluted with an inert solvent **S**, and epoxide compound **E2** is added under heating, wherein the quantity of **E2** is preferably chosen such that the amount of substance *n*(EP;E2) of epoxide groups in **E2** is
   - from 30 % to 70 % of the amount of substance *n*(RG;M1) of epoxide-reactive groups RG comprised in mixture **M1,** or
   - from 30 % to 70 % of the amount of substance *n*(RG;M2) of epoxide-reactive groups RG comprised in mixture **M2** if optional step b is performed, or
   - from 30 % to 70 % of the amount of substance *n*(RG;M3) of epoxide-reactive groups RG comprised in mixture **M3** if optional steps b and c are performed, wherein the epoxide-reactive groups RG are primary, secondary or tertiary amino groups, aromatic and aliphatic hydroxyl groups, thiol groups, and acid groups, such as carboxyl groups, which are present in the mixtures, their reactivity being controlled by their chemical nature and by steric considerations, and
      the reaction is continued until at least 95 % of the epoxide groups in **E2** are consumed, to form an intermediate **I**
- in step e, a solution of the bismuth salt or chelate **B** in deionised water is prepared by heating under stirring, bismuth oxide Bi₂O₃ or a basic bismutyl compound, both individually or collectively referred to as **B1,** with an excess of from 100 % to 700 % of the stoichiometric amount of an organic acid **B2** and/or an organic chelate former **B3**,
- in step f, the solution of the intermediate **I** of step d is added under stirring to the solution of the bismuth salt or chelate **B** in deionised water prepared in step e, to form a dispersion, and
- in step g, after optional addition of further water, the dispersion of step f is heated, and epoxide compound **E3** is added and reacted until all epoxide groups are consumed to form the chain-extended epoxy-amine adduct **EA**.

Chain-extension refers to the reaction made in the last step g which is made in the aqueous phase.

The urethane additive U is added after step g, or preferably, added to the solution of the bismuth salt or chelate, **B**, together with the solution of the intermediate **I**, during step f, or separately after step f, or it is added, in another preferred embodiment, to the solution of the intermediate **I** after step d.

The aqueously dispersed mixture of chain-extended epoxy-amine adducts **EA**, a urethane additive **U**, and a bismuth salt or chelate **B** as described hereinabove, or made by the process as detailed hereinabove can be used to form coating films on substrates where comprising mixing and homogenising the binder mixtures, where optionally, pigments and/or fillers may be added to this binder mixtures to form a coating composition, which said coating composition is applied to a substrate preferably by cationic electrodeposition, and subjected to drying without addition of a curing agent.

### Detailed Disclosure of the Preferred Embodiments

A compound is defined herein by comprising "moieties derived from" certain starting materials, if it is made from starting materials which are molecules having functional groups that lead to reaction between these starting materials under formation of compound molecules that contain fragments of the molecules of the starting materials with the functional groups removed, and newly formed bonding groups from these functional groups that connect these fragments. Starting materials having, e. g., hydroxyl groups react under esterification with an acid or an acid anhydride, thereby forming an ester which comprises the part of the hydroxy-functional molecule with the hydroxyl group removed, which part is referred to as "moiety derived from that molecule", and the bonding group is an ester group in this example. So a moiety derived from 1,6-dihydroxyhexane is 1,6-hexanediyl. Likewise, a moiety derived from a diisocyanate of formula O=C=N-X-N=C=O which is reacted with an alcohol to form a urethane is the divalent group -X-. A moiety derived from an oxirane molecule which is reacted with an acid under formation of an ester is then R-CH(OH)-CH₂ - when the oxirane ring is bound to a monovalent group R.

In a preferred embodiment, moieties derived from an amidoamine **A41** and at least one of the amines **A1, A2**, and **A3** are present in the epoxy-amine adduct **EA**.

In a further preferred embodiment, an amidoamine **A41** and at least one of the amines **A1, A2**, and **A3** are present in mixture **M1.**

In a further preferred embodiment, an amidoamine **A41**, an amine **A1,** and at least one of the amines **A2** and **A3** are present in mixture **M1.**

In a further preferred embodiment, an amidoamine **A41**, an amine **A2** and at least one of the amines **A1** and **A3** are present in mixture **M1.**

In a further preferred embodiment, an amidoamine **A41**, an amine **A3**, and at least one of the amines **A1** and **A2** are present in mixture **M1.**

In a further preferred embodiment, at least one of the amines **A1, A2**, and **A3** is added to the mixture **M2**.

In a further preferred embodiment, moieties derived from an amidoamine **A41**, an amine **A1,** and at least one of the amines **A2** and **A3** are present in the epoxy-amine adduct **EA**.

In a further preferred embodiment, moieties derived from an amidoamine **A41**, an amine **A2**, and at least one of the amines **A1** and **A3** are present in the epoxy-amine adduct **EA**.

In a further preferred embodiment, moieties derived from an amidoamine **A41**, an amine **A3**, and at least one of the amines **A1** and **A2** are present in the epoxy-amine adduct **EA**.

In a further preferred embodiment, a fatty acid **A4** is present in mixture **M1.**

In a further preferred embodiment, moieties derived from a phenolic compound **A5** are present in the epoxy-amine adduct **EA**.

In a further preferred embodiment, a phenolic compound **A5** is present in the mixture **M2**.

In a further preferred embodiment, the mixture **M1** is reacted with an epoxide compound **E1** having on average, at least one, and less than two, epoxide groups per molecule.

It is also preferred to use more than one of the above preferred selections together.

The epoxide components **E1** have at least one, and less than two, 1,2-epoxide groups per molecule, and are of aromatic or aliphatic nature. Glycidyl ethers of monohydric aliphatic or mixed aliphatic-aromatic alcohols, or glycidyl esters of aliphatic or aromatic monocarboxylic acids are preferred as monoepoxides. The alcohols are preferably selected from the group consisting of 2-ethylhexanol, decanol, tridecanol, stearyl alcohol, and benzyl alcohol. The acids are preferably selected from the group consisting of branched aliphatic monocarboxylic acids having from 5 to 11 carbon atoms, particularly, glycidyl neopentanoate, glycidyl 2-ethyl hexanoate, glycidyl neodecanoate, and the mixtures of such acids which are commercially available under the trade names of ®Versatic acids. Mixtures of such ethers and such esters can likewise be used. Such mixtures are preferably made in a way that the average number of epoxide groups per molecule, is at least 1.0, and less than 2.0, preferably, from 1.2 to 1.8.

The epoxide components **E2** have at least two, preferably on average two, epoxide groups per molecule. Preferred are glycidyl esters of multifunctional organic acids, and glycidyl ethers of multifunctional organic hydroxy compounds, both of which may be aliphatic or aromatic. Further preferably, they have a specific amount of epoxide groups in the range of from 3.0 mol/kg to 5.8 mol/kg ("epoxide equivalent" from 170 g/mol to 333 g/mol). Particularly preferred are aromatic epoxide resins based on aromatic dihydroxy compounds where the hydroxyl group is bound to an aromatic carbon atom, such as those derived from bisphenol A, bisphenol F, particularly the so-called "liquid epoxy resins".

As epoxide component **E3**, a selection from the group **E2** is made, particularly diglycidyl ethers of aromatic or aliphatic diols, and diglycidyl esters of aromatic or aliphatic diacids, or mixtures of these. Among the diglycidyl ethers of diols, the diglycidyl ethers of bisphenol A (2,2-bis-(4-hydroxyphenyl)-propane), and of bisphenol F (bis-(4-hydroxyphenyl)-methane) are preferred, as well as the diglycidyl ethers of ethylene glycol, 1,-4-butylene glycol, and of oligomeric or polymeric 1,2-propylene glycols. As diglycidyl esters, particularly those derived from dimeric fatty acids are mentioned here. Both the glycidyl ethers of aliphatic oligomeric or polymeric diols, as well as the diglycidyl esters of aliphatic diacids act as flexibilising components in the epoxy-amine adducts of this invention. Particularly preferred as **E3** are epoxide compounds having a molar mass of from 170 g/mol up to 800 g/mol, and among these, epoxide resins made from bisphenol A and epichlorohydrin. It is especially preferred to use the diglycidyl ether of bisphenol A, having a specific amount of epoxide groups of 5.9 mol/kg ("epoxide equivalent" of 170 g/mol), the commercial product having a slightly lower specific amount of epoxide groups of from 5.7 mol/kg to 5.8 mol/kg.

It is possible to use the same compounds in **E2** and in **E3**, the distinction is made to reflect the step of addition of these epoxide-functional compounds **E2** and **E3** in the process according to the invention.

The amines **A1** are selected from aliphatic linear, branched, or cyclic amines each having at least one secondary and at least one primary amino group, preferably two primary amino groups, and from three to twenty carbon atoms. Preferred amines include N-methyl ethylene diamine, 3- or 4-aminopiperidine, diethylene triamine, triethylene tetramine, tetraethylene pentamine, N,N'-bis-(2-aminoethyl)-1,3-diamino-propane, N,N'-bis-(3-aminopropyl)-1,2-diaminoethane, N,N'-bis-(3-aminopropyl)-1,3-diaminopropane, N,N'-bis-(3-aminopropyl)-1,4-diaminobutane, N,N'-bis-(4-aminobutyl)-1,4-diaminobutane, 4,4'-diaminodibutylamine (dibutylene triamine), N,N'-bis-(6-aminohexyl)-1,6-diaminohexane, and 6,6'-diaminodihexyl-amine (bis-hexamethylene triamine).

The acids **A4** are fatty acids having one carboxyl group, and from six to thirty carbon atoms, preferably from eight to twenty-four carbon atoms. They are either saturated or singly or multiply unsaturated, and may also be used as mixtures, particularly in the form of naturally occurring mixtures as obtained by processsing of oils and fats. Preferred fatty acids include stearic acid, palmitic acid, oleic acid, linoleic acid, linolenic acid, arachidonic acid, behenic acid, erucic acid, and ricinoleic acid, and among the mixtures, linseed oil fatty acid, soybean oil fatty acid, coconut oil fatty acid, rapeseed oil fatty acid, and tall oil fatty acid.
In a preferred embodiment, an amount corresponding to a mass of preferably not more than 60 % of the mass of the fatty acids **A4**, of dicarboxylic acids **A4**' which are preferably aliphatic, such as glutaric acid, adipic acid, and cyclohexane dicarboxylic acid, can be added to the fatty acids **A4**. Preferred as acids **A4**' are dimeric fatty acids, which preferably have a mass fraction of aromatic constituents of not more than 20 %.

The amines **A2** are aliphatic linear, branched or cyclic secondary amines having preferably one secondary amino group, and from three to twenty carbon atoms, preferably from four to fourteen carbon atoms. They may also carry further substituents that can be non-functional, such as alkoxy groups, or can be functional such as hydroxyl groups or thiol groups. Among the preferred amines are di-n-butylamine, diethanolamine, and bis-2-hydroxypropylamine. Mixtures of these can also be used.

The amines **A3** are aliphatic linear, branched or cyclic amines having one tertiary, and at least one primary amino group, and from four to twenty carbon atoms. Preferred amines are N,N-dimethylaminoethylamine,N,N-diethylaminoethylamine, N,N-dimethylaminopropyl-amine-3, N,N-diethylaminopropylamine-3, N-(2-aminethyl)-piperidine, and N,N'-bis(2-aminoethyl)-piperazine. Mixtures of these amines can also be used.

The phenolic compounds **A5** having from six to twenty carbon atoms and at least two phenolic hydroxyl groups are preferably dihydroxy aromatic compounds such as resorcinol, hydroquinone, dihydroxydiphenyl, dihydroxydiphenyl sulphone, bisphenol A, bisphenol F, and may optionally be substituted by alkyl or alkoxy groups such as methyl or methoxy groups, halogen groups, or trifluoromethyl groups. If phenolic compounds having three or more phenolic hydroxyl groups are used in mixture with dihydroxy aromatics, the amount of higher functional compounds should be limited to not more than 10 % of the mass of all such phenolic compounds, or compensated by addition of monofunctional phenolic compounds to limit the degree of branching in the resultant polymeric adduct **EA**.

The amidoamines **A41** are reaction products of the fatty acids **A4** as defined supra, and of amines **A1** which are also defined supra, which have at least one amide group, and at least one amino group which has not been converted to an amide group. Usually, in an amine having both primary and secondary amino groups, and with a stoichiometry that provides one mole of fatty acid per one mole of primary amino groups, the main reaction product is an amidoamine with amide groups stemming from the primary amino groups, and with unreacted secondary amino groups. In the preferred case of using an amine **A1** which has two primary amino groups, and at least one secondary amino group, amidoamines **A41** are formed that have two amide groups, and at least one secondary amino group. In a preferred embodiment, the amidoamines **A41** are made by reaction of fats or oils which are substantially triglycerides of fatty acids **A4**, or of mixtures of two or more different fatty acids **A4**.

Any water-soluble bismuth salt or bismuth chelate complex **B** can be used in the context of this invention. Preferred salts are bismuth salts having an anion derived from an organic acid, which may be a carboxylic, sulphonic, or phosphorus-based acid. Particularly preferred are bismuth hydroxycarboxylates, such as salts of organic hydroxy acids having at least one carboxylic group and at least one hydroxyl group, such as the salts of glycolic acid, lactic acid, 2- or 3-hydroxybutyric acid, 3-hydroxyisobutyric acid, 2,2-bis-hydroxymethyl propionic acid, 2,2-bis-hydroxymethyl butyric acid, malic acid, and tartaric acid. If bismuth salts of inorganic acids, such as nitric acid, or bismuth salts of an organic acid such as methanesulphonic acid that do not have hydroxyl groups or keto groups or amino groups are used, it has proven advantageous to add a chelate former such as a mercaptocarboxylic acid, e. g., dimercaptosuccinic acid, hydroxycarboylic acids as mentioned supra, and particularly preferred, aminopolycarboxylic acids and their salts, notably iminodiacetate, nitrilotriacetate, ethylenediamine tetraacetate, diethylenetriamine pentaacetate, 2-hydroxy-ethyliminodiacetate, and pyridine dicarboxylate, etc. A salt or chelate is regarded as "water-soluble" in the context of this invention if a saturated salt solution at 23 °C has a mass fraction of dissolved bismuth salt or bismuth chelate complex in the solution of at least 0.05 g / 100 g.

The process to form the chain extended epoxy-amine adduct by reaction, in the aqueous phase, with the epoxide component **E3** and quaternisation of tertiary amino groups present in the reaction mixture is generally conducted at a temperature of from 40 °C to not more than 105 °C, and under thorough stirring to ensure temperature control. Chain extension of the epoxy-amine adduct in the last step is preferably made, according to the process of the present invention, in the aqueously dispersed phase in order to be able to cope with the high resin viscosity.

In a preferred embodiment, in step a of the process, the mixture **M1** is prepared from an amidoamine **A41**, an amine **A2**, and an amine **A3**.

In a further preferred embodiment, step c of the process is executed, and amines **A2** and **A3** and a phenolic compound **A5** are added to the mixture of preceding step a, **M1,** or to the mixture of preceding step b, **M2**, to yield a mixture **M3**.

It is also preferred to use more than one of the above preferred selections together in the process.

In a particularly preferred embodiment of the process, an amidoamine **A41** is made in a separate step from an amine **A1** and a fatty acid **A4**, where preferably, the amine **A1** has one secondary amino group and two primary amino groups, such as diethylene triamine, dibutylene triamine, and bis-hexamethylene triamine, and the fatty acid **A4** preferably has an iodine number of from 120 cg/g to 195 cg/g. The amidoamine **A41** is made, in a further preferred embodiment, by reacting an oil or fat which is a triglyceride of a fatty acid **A4**, or a mixture of two or more different fatty acids **A4**, with an amine **A1**. Depending on the stoichiometry, mixtures of diglycerides and monoglycerides, and glycerol, are concurrently formed in this reaction.

It is also preferred to prepare a mixture comprising the amidoamine **A41**, a further fatty acid **A4** which is preferably unsaturated, and has an iodine number of from 100 cg/g to 150 cg/g, and a further amine **A1,** and to react this mixture with a monoepoxide **E1**, preferably a glycidyl ester of an aliphatic branched monocarboxylic acid having from four to twelve carbon atoms, to reduce the functionality of the mixture. After addition of a phenolic compound **A5**, preferably, bisphenol A or bisphenol F, an amine **A2** which is preferably diethanolamine, and an amine **A3** which is preferably diethylaminopropylamine or dimethylaminopropylamine, the inert solvent and an epoxide resin **E2** are added and reacted until the epoxide groups were consumed. This resin is then dispersed in water wherein a bismuth salt or chelate complex had been dissolved before. After heating this dispersion to a temperature of preferably between 60 °C and 90 °C, a second epoxide compound **E3** is added, where preferably the amount *n*(EP;E3) of epoxide groups in this epoxide compound **E3** divided by the amount *n*(EP;E2) of epoxide groups of the epoxide resin **E2** is from 0.05 mol/mol to 0.35 mol/mol, particularly preferred from 0.1 mol/mol to 0.30 mol/mol.

The urethane additive **U** has at least one, preferably two or more, urethane groups in its molecule, and has optionally functional groups which are preferably hydroxyl groups and carboxylic acid groups, and is made by reaction of
(a) at least one at least difunctional organic isocyanate **U1**, at least one at least difunctional aliphatic alcohol **U2**, and optionally at least one monohydric aliphatic alcohol **U3** to form a hydroxyurethane **U123**, or
(b) at least one aliphatic diamine **U5** with a cyclic aliphatic carbonate **U4** to form a dihydroxyurethane **U54** or a mixture thereof with unreacted diamine **U5**, which is then reacted with diisocyanate **U1** to form a hydroxyurethane **U541** optionally also comprising a hydroxyurea-urethane **U51**, or
(c) at least one oligomeric or polymeric aliphatic diol or triol **U6** with at least one at least difunctional organic isocyanate **U1** to form a hydroxyurethane **U61**, and reacting this with a cyclic acid anhydride **U7** to convert a part or all of the hydroxyl groups by formation of an ester group, and liberation of an acid group, to form an acid-functional urethane **U617**.

The urethane additive **U** is preferably added to the intermediate **I** before step f. The components used in the synthesis of the urethane additives **U** are preferably the following:
**U1** is an at least difunctional organic isocyanate of formula X¹ (NCO)ₘ where m is 2 or more, and X¹ is an aromatic or aliphatic or araliphatic group having up to fifteen carbon atoms, and **U1** is preferably selected from the group consisting of 1,6-hexanediisocyanate, isophorone diisocyanate, bis-4-isocyanatophenylmethane, the 2,4- and 2,6 isomers of toluene diisocyanate, and tetramethyl-1,3-xylylene diisocyanate.
**U2** is an at least difunctional aliphatic alcohol of formula X² (OH)ₙ where m is 2 or more, and X² is an aliphatic linear or branched group having up to sixty carbon atoms where one or more carbon atoms are optionally replaced by an oxygen group -O-, or an ester group -CO-O-, where such oxygen or ester groups are separated by at least two neighbouring carbon atoms, and **U2** is preferably selected from the group consisting of ethylene glycol, 1,2- and 1,3-propanediol, 1,4-butanediol, 1,6-hexanediol, 2-methyl-2,4-pentanediol, 2,2,4-trimethyl-1,3-pentanediol, and glycerol, trimethylolethane, trimethylolpropane, diglycerol, ditrimethylolethane, ditrimethylolpropane, erythritol and pentaerythritol, dierythritol and dipentaerythritol. It is also possible to use oligomeric or polymeric hydroxy-functional compounds **U2** having at least four carbon atoms such as oligomeric or polymeric ethyleneglycol, oligomeric or polymeric propyleneglycol, and oligomeric or polymeric caprolactonediol which is preferably made from caprolactone and any of the di- or multifunctional alcohols mentioned herein. **U2** can also have further reactive groups such as carboxyl groups, particularly preferred as such are dimethylolpropionic acid and dimethylolbutanoic acid.
**U3** is a monohydric aliphatic linear or branched or cyclic alcohol having from one to twenty carbon atoms and one hydroxyl group; preferred alcohols are methanol, ethanol, propanol, butanol, 2-ethylhexanol, decylalcohol, tridecylalcohol, and stearylalcohol.
**U4** is a cyclic aliphatic carbonate having at least three carbon atoms and at least one cyclic carbonate group, and is preferably ethylenecarbonate, propylenecarbonate (4-methyl-1,3-dioxolan-2-one), 1,2-butylenecarbonate, or 2,3-butylenecarbonate.
**U5** is an aliphatic diamine having two primary amino groups, and at least six carbon atoms, and may be a linear, branched or cyclic aliphatic amine or an aliphatic-aromatic amine having amino groups bound to aliphatic carbon atoms. Useful diamines are 1,2-diaminoethane, 1,3-diaminopropane, 1,4-diaminobutane and 1,6-diaminohexane, 1,2- and 1,4-diaminocyclohexane, isophoronediamine, xylylenediamine, and diamines derived from oligomeric and polymeric polyoxyalkylenes having from two to four carbon atoms in the alkylene groups, such as alpha,omega-diamino-polyoxyethylene and alpha,omega-diamino-polyoxypropylene.
**U6** is an oligomeric or polymeric aliphatic dihydroxy compound or an oligomeric or polymeric aliphatic trihydroxy compound, which is preferably obtained by reaction of linear or branched aliphatic diols or triols preferably selected from the group consisting of ethyleneglycol, 1,2-dihydroxypropane, glycerol, trimethylolethane, and trimethylolpropane with ethyleneoxide or propyleneoxide or mixtures of these to form a hydroxyfunctional polyether, or by reaction of linear or branched aliphatic diols or triols preferably selected from the group consisting of ethyleneglycol, 1,2-dihydroxypropane, glycerol, trimethylolethane, and trimethylolpropane with lactones such as butyrolactone, valerolactone, caprolactone, and lactide to form a hydroxyfunctional polyester. For the purpose of this invention, an oligomeric compound comprises up to ten repeating units, and is referred to as polymer if it has more than ten repeating units.
**U7** is a cyclic acid anhydride derived from a dicarboxylic acid having at least four carbon atoms, and is preferably selected from the group consisting of maleic anhydride, phthalic acid anhydride, tetrahydrophthalic acid anhydride, and hexahydrophthalic acid anhydride.

The aqueous dispersions thus obtained have generally a mass fraction of solids of between 20 % and 60 %. The epoxy-amine adducts **EA** have preferably an amine number of from 40 mg/g to 150 mg/g, and hydroxyl numbers of from 30 mg/g to 150 mg/g, in each case in relation to the mass of solid resin. Their Staudinger index is preferably from 30 cm³/g to 100 cm³/g, particularly preferably from 40 cm³/g to 90 cm³/g, as measured on solutions in N-methyl pyrrolidone at room temperature (23 °C). A value of 60 cm³/g corresponds to a weight-average molar mass of 40 kg/mol, as measured by gel permeation chromatography using polystyrene standards in the usual way.

The quantity formerly referred to as "limiting viscosity number", called "Staudinger index" *J*_{g} in accordance with DIN 1342, part 2.4, is the limiting value of the Staudinger function *J*ᵥ measured with decreasing concentration and shear stress, wherein *J*ᵥ is the ratio of the relative change in viscosity ηᵣ -1, divided by the mass concentration β_{B} = *m*_{B} / V of the solute B (mass *m*_{B} of the solute in a volume V of the solution), given by *J*ᵥ = (ηᵣ - 1) / β_{B} . ηᵣ - 1 stands for the relative change in dynamic viscosity, according to ηᵣ - 1 = (η - ηₛ) / ηₛ. The relative viscosity ηᵣ is the ratio of the dynamic viscosity η of the solution under consideration and the dynamic viscosity ηₛ of the pure solvent. The physical significance of the Staudinger index is that of a specific hydrodynamic volume of the solvated polymer coil at infinite dilution and at rest. The unit conventionally used for *J* is "cm³/g"; formerly also "dL/g".

The aqueous dispersion of the present invention canbe used to formulate coating compositions by adding usual additives such as coalescing agents, wetting agents, optionally pigments, and rheology additives. These coating compositions can be applied by any process, particularly, by brushing, roller-coating, curtain-coating, spraying, or dipping, on any substrate, such as concrete, plaster, mortar or stone, or wood, paper, cardboard, leather, or rubber, or metals, glasses, thermoplastic materials, duromeric materials, and elastomeric materials. A particularly useful method of application is electrophoretic deposition on electrically conductive substrates such as base metals. For this purpose, the dispersions are usually diluted with further water to a mass fraction of solids of about 15 %, and are deposited from a bath containing this dispersion onto metal substrates which serve as cathodes. The coating film applied by any of the techniques mentioned hereinbefore is dried at a temperature of from ambient temperature (25 °C) to 160 °C, preferably from 50 °C to 130 °C. As the film is physically drying, there is no need to add a chemical crosslinker such as blocked isocyanates. Consequently, there is no need to split off a blocking agent which needs higher temperature, and thus, more energy, and leads to air pollution by the cleavage products of the blocked isocyanates. If cleavage products from the blocked isocyanates are trapped in the coating film and cannot escape due to premature solidification of the surface of the coating film, they may lead to formation of bubbles in the dried coating film.

The invention therefore further relates to a process to coat substrates, preferably metal or metal containing substrates, comprising dipping the substrates in a bath comprising the cationic water-dilutable binders of the present invention and preferably containing a mass fraction of less than 1 % of crosslinker, by cathodic electrodeposition, followed by removing the substrate from the bath, and subjecting the coated substrate to a drying step at a temperature of between 20 °C and 130 °C for a time between five minutes and twenty-four hours. The drying step is preferably done at a temperature of from 60 °C to 120 °C, most preferably from 65 °C to 100 °C, for a time between five minutes and two hours.

Crosslinker as used in this description is a resin or a chemical compound that has at least two reactive groups which can react with functional groups in the epoxy amino adduct EA for to form a crosslinked network. The bath is preferably substantially free of any crosslinker, more specifically of isocyanate or blocked isocyanate crosslinkers.

After the drying step a coating film is formed on the substrate and this coating film does not need further heating at a temperature of higher than 120 °C. It has been found that good surface appearance and high corrosion resistance can already be obtained with coating film thickness of about 0.010 mm. The coated substrate can then be used as such or can be coated by one or more further coating layers, such as filler and surfacer coatings, and pigmented or unpigmented topcoats.

The cationic binders and the process according to the invention permit to obtain good quality coatings with a very good corrosion resistance, even in severe conditions. The binders and process according to the invention permit a substantial energy saving over the current CED processes in that it is not needed to heat coated substrates to a high temperature to activate the crosslinker. Moreover the collection and removal of blocking agents usually used in combination with commonly used CED resins is no longer necessary.

The invention is further illustrated by the following examples. In these examples as well as in the whole specification, all quantities measured in "%" relate to mass fractions or mass ratios, as measured in cg/g or g/hg, except where specifically denoted otherwise.

The following abbreviations are used in the examples:

| | | |
|---|---|---|
| EC | Ethylenecarbonate | M = 88 g/mol |
| TDI | Toluenediisocyanate (mixture of isomers) | M = 174 g/mol |
| MDI | Diphenylmethane-4,4'-diisocyanate | M = 250 g/mol |
| HDI | 1,6-Hexamethylenediisocyanate | M = 168 g/mol |
| IPDI | Isophoronediisocyanate | M = 222 g/mol |
| PC | Propylenecarbonate | M = 102 g/mol |
| PPGD | Polypropyleneglycol-diamine | M = 230 g/mol (®Jeffamine D-230, Huntsman) |
| XDA | m-Xylylenediamine | M = 136 g/mol |
| BG | Butylglycol | M = 118 g/mol |
| BDG | Butyldiglycol | M = 162 g/mol |
| BD | 1,4-Butanediol | M = 90 g/mol |
| CD | Caprolactonediol | M = 550 g/mol (®Capa 2054, Perstorp) |
| PE | Polyestertriol 3050 | M = 540 g/mol (®Capa 3050, Perstorp) |
| PD | 1,2-Propanediol | M = 76 g/mol |
| TMP | Trimethylolpropane | M = 134 g/mol |
| HG | Hexyleneglycol (2-Methyl-2,4-pentanediol) | M = 118 g/mol |
| PPG | Polypropyleneglycol 400 | M = 400 g/mol |
| THPSA | Tetrahydrophthalic anhydride | M = 152 g/mol |
| DMPS | Dimethylolpropionic acid | M = 134 g/mol |

M is the rounded molar mass of these chemicals.

### Example 1 Bismuth salt preparation

362 g (2.7 mol) of dimethylolpropionic acid and 675 g of deionised water were charged into a 41 glass flask equipped with a stirrer and a reflux-condenser. The solution was heated to 75 °C. 111 g (0.24 mol) of Bi₂O₃ were added under good stirring in small portions within sixty minutes. Then the mixture was allowed to stir for further sixty minutes at this temperature, whereby a greyish-white, slightly opaque solution was obtained (no more undissolved yellow parts of Bi₂O₃ to be seen). Finally, 1282 g of deionised water were added and the solution was cooled to room temperature. The obtained bismuth salt preparation has a mass fraction of bismuth of 4.1 %.

### Example 2 Amino-functional fatty acid amide FA

146 g (1.0 mol) of triethylenetetramine and 1320 g(1.5 mol) of linseed oil were charged into a 3 1 three-necked vessel equipped with a thermocouple, a stirrer and a reflux condenser and heated to 95 °C under stirring. This temperature was held for approximately six hours until at least 95 % of the primary amino groups had reacted, as monitored by the decrease in the amine number measured, starting from 153 mg/g. Approximately 1460 g of a mixture of the amide and glycerides were obtained, which mixture had an amine number of 79 mg/g.

### Example 3.1 Preparation of the urethane component U01

1463 g (12.4 mol; *n*(OH) = 24.8 mol) of HG, 162 g (0.3 mol; *n*(OH) = 0.9 mol) of PE and 292 g of BDG (1.8 mol; *n*(OH) = 1.8 mol) were charged into a glass vessel and heated to 80 °C. 2266 g (9.1 mol; *n*(NCO) = 18.2 mol) of MDI were added in portions within one hour under cooling, keeping the temperature in the range from 80 °C to 85 °C. When the whole amount of MDI had been added, the reaction mass was kept for one further hour at 80°C, in order to allow the complete consumption of the isocyanate groups. Finally, the reaction product was diluted to a mass fraction of 80 % with methoxypropanol.

Further urethane components (U02 to U05, U07; examples 3.2 to 3.5; 3.7) had been produced, following this procedure. Kind and mass of the reactants (educts) are compiled in Table 1.

**Table 1 Urethane components**

| Urethane | Educt E | *m(E)* | FG kind | *n*(FG) | m(U) | *n*(-O-CO-NH)/*m*(U) |
|---|---|---|---|---|---|---|
| Unit | | g | | mol | g | mol/kg |
| | MDI | 2266 | -NCO | 18.2 | | |
| U01 | HG | 1463 | -OH | 24.8 | 4183 | 4.36 |
| | PE | 162 | -OH | 0.9 | | |
| | BDG | 292 | -OH | 1.8 | | |
| | TDI | 534 | -NCO | 6.2 | | |
| U02 | BG | 496 | -OH | 4.2 | 1181 | 5.25 |
| | PE | 54 | -OH | 0.3 | | |
| | BDG | 97 | -OH | 0.6 | | |
| | TDI | 534 | -NCO | 6.2 | | |
| U03 | PE | 54 | -OH | 0.3 | 1366 | 4.54 |
| | BDG | 778 | -OH | 4.8 | | |
| | IPDI | 688 | -NCO | 6.2 | | |
| U04 | BDG | 859 | -OH | 5.3 | 1709 | 3.63 |
| | PE | 162 | -OH | 0.9 | | |
| | TDI | 534 | -NCO | 6.2 | | |
| U05 | BG | 165 | -OH | 1.4 | 1027 | 6.03 |
| | PD | 274 | -OH | 7.2 | | |
| | TMP | 54 | -OH | 1.2 | | |
| | HDI | 34 | -NCO | 0.4 | | |
| U06 | PPGD | 230 | -NH₂ | 2.0 | 427 | 4.68 |
| | PC | 163 | -O-CO-O- | 1.6 | | |
| | IPDI | 444 | -NCO | 4 | | |
| U07 | BD | 225 | -OH | 5 | 897 | 4.47 |
| | CD | 225 | -OH | 1 | | |
| | HDI | 202 | -NCO | 2.4 | | |
| U08 | XDA | 136 | -NH₂ | 2 | 514 | 8.56 |
| | EC | 176 | -O-CO-O- | 2 | | |
| | MDI | 250 | -NCO | 2 | | |
| U09 | PPG | 800 | -OH | 4 | 1354 | 1.48 |
| | THPSA | 304 | -CO-O-CO- | 2 | | |
| | TDI | 522 | -NCO | 6 | | |
| U10 | DMPS | 268 | -OH | 4 | 1026 | 5.85 |
| | BG | 236 | -OH | 2 | | |

| | | | | | | |
|---|---|---|---|---|---|---|
| FG stands for "functional group", with the kind indicated as chemical formula, and its amount of substance stated in the SI unit "mol". *n*(-O-CO-NH-) / m(U) is the specific amount of substance of urethane groups -O-CO-NH- in the urethane reaction product U. | | | | | | |

### Example 3.6 Preparation of the urethane component U06

230 g (1.0 mol; *n*(NH₂) = 2 mol) of PPGD and 163 g (1.6 mol) of PC were charged into a glass vessel and heated within one hour to 110 °C. Temperature was kept for two hours at 110 °C under stirring and occasional cooling (slight exothermy) until an amine value of 60 mg/g was obtained. The reaction mixture was then cooled to 80 °C and 34 g (0.2 mol) of HDI were added within fifteen minutes, whereby the temperature had risen to 90 °C by exothermy. Temperature was kept at 90 °C for two hours, in order to consume all amino groups (amine value < 1 mg/g). Finally, the reaction product was diluted to a mass fraction of 80 % with methoxypropanol. A further urethane component U08 had been produced, following this procedure (Example 3.8).

### Example 3.9 Preparation of the urethane component U09

800 g (2.0 mol; *n*(OH) = 4.0 mol) of PPG were charged into a glass vessel and heated to 60 °C. 250 g (1.0 mol, *n*(NCO) = 2.0 mol) of MDI were added in portions within one hour under cooling, keeping the temperature in the range from 80 °C to 85 °C. When the whole amount of MDI had been added, the reaction mass was kept for one further hour at 80 °C, in order to allow the complete consumption of the isocyanate groups. 304 g (2.0 mol) of THPSA were added in portions within 15 minutes, then the temperature was increased to 160 °C in one hour. This temperature was maintained for two hours in order to react all anhydride groups (acid value of the reaction product: 83 mg/g). Finally, the reaction product was diluted to a mass fraction of 80 % with methoxypropanol.

### Example 3.10 Preparation of the urethane component U10

522 g (3.0 mol; *n*(NCO) = 6.0 mol) of TDI were charged into a glass vessel and heated to 30 °C. 236 g (2.0 mol; *n*(OH) = 2.0 mol) of BG were added continuously within two hours under cooling (strong exothermy), while keeping the temperature below 50 °C. After the whole amount of BG had been added, the reaction mass was kept for one further hour at 50 °C, in order to complete the reaction with BG (mass fraction of NCO groups in the reaction mixture: 22 %). Afterwards the reaction mixture was diluted with methoxypropyl-acetate to a mass fraction of 80 %. The temperature was then adjusted to 90 °C and 268 g (2.0 mol) of DMPS were added in small portions within two hours. Temperature was allowed to rise to 100 °C by exothermy, applying temporary cooling to keep. After the DMPS addition had been finished, temperature was kept for one hour to complete the reaction of all isocyanate groups (residual mass fraction of NCO groups in the reaction mixture < 0,1%). The reaction product was finally diluted to a mass fraction of 80 % with methoxypropanol.

### Example 4.1: Preparation of the urethane containing, epoxide-amine adduct dispersion (EA1)

1466 g (1.0 mol) of the amino-functional fatty acid amide FA of example 2 and 561 g (2.0 mol) of linseed oil fatty acid were charged into a three necked vessel equipped with a stirrer and a reflux condenser and heated to 80 °C. Under stirring and in this sequence, 730 g (3.2 mol) of bisphenol A, 315 g (0.5 mol) of a dimeric fatty acid (®Pripol 1017, Croda, M_{w} = 630 g/mol), 210 g (2.0 mol) of diethanolamine and 184 g (1.8 mol) of dimethylaminopropyl-amine were added. After one hour, when the reaction mixture was a homogenous melt, 4530 g (11.9 mol) of a liquid diepoxide based on bisphenol A (M_{w} = 380 g/mol) were added over ninety minutes while the temperature rose due to exothermy up to 160 °C. The reaction mixture was held at 160 °C for one further hour until no more free epoxide groups in the modified epoxide amine adduct EA1 could be detected. Finally, 800 g of the urethane component U01 were added and the mixture was allowed to stir for thirty minutes. A dilution vessel was prepared into which 9 kg of deionised water, 640 g of lactic acid (aqueous solution with a mass fraction of lactic acid of 50 %), and 1732 g of the bismuth salt preparation BP of example 1 were charged. The resin from the reaction vessel was poured into the pre-charged dilution vessel under stirring within thirty minutes. The temperature of the mixture was adjusted to 70 °C, and the mixture was then stirred at this temperature for one hour. By sequential addition of portions of water, the mixture was further diluted to a mass fraction of 43 %. The aqueous dispersion thus obtained was then heated to 80 °C whereupon a second portion of 400 g (1.05 mol) of a liquid diepoxide based on bisphenol A (M_{w} = 380 g/mol) was added, and the resulting mixture was stirred for two further hours at 80 °C. By the addition of further water and under cooling to room temperature, the mixture was diluted to a dispersion having a mass fraction of solids of 40 %, with a bismuth content of 0.3 % based on the mass of the dispersion.

### Examples 4.2 to 4.15

The procedure of Example 4.1 was repeated, replacing the 800 g of solution of urethane U01 which corresponds to a mass of solid urethane U01 of 640 g by solutions of urethanes U02 to U10 (examples 4.2 to 4.10), by a mixture of solutions of urethanes U02 and U09 with a mass ratio of solids of 550 g to 250 g (example 4.11), by a mixture of solutions of urethanes U03 and U10 with a mass ratio of solids of 750 g to 150 g (example 4.12), by 850 g of a hydroxy-functional ethoxylate of bisphenol A "C1" with *n*(OE) / *n*(BPA) of 6 mol: 1 mol, where *n*(OE) is the amount of substance of oxyethylene moieties -O-CH₂-CH₂-, and *n*(BPA) is the amount of substance of 2,2-bis(4-oxyphenyl)propane moieties in the ethoxylate C1 (comparative example 4.13), and by 850 g of a hydroxy-functional polyester C2 made from 1,4-dihydroxy-butane and adipic acid with a mass-average molar mass of 2200 g/mol, as determined by size-exclusion chromatography using polystyrene standards (comparative example 4.14). A non-modified epoxy-amine adduct binder as used in example 4.1 without any additive was used as further comparison (comparative example 4.15). The variable constituents of the coating compositions prepared as explained in Examples 4.1 to 4.15, and the total mass of solids, as well as the glass transition temperature measured on a film prepared therefrom (dried for seven days at 23 °C and 50 % of relative humidity, heating rate of 10 K/min, second heating cycle) is summarised in table 2.

**Table 2 Variable Constituents of Coating Composition and Data**

| | additive U | | | | | |
|---|---|---|---|---|---|---|
| Example | Kind | mass *m*(U) in g | mass fraction of additive *m*(U)/ *m*ₛ in % | mass *m*ₛ of binder incl. additives in g | specific urethane content *n*(-O-CO-NH-)/ *m*ₛ in mol / kg | glass transition temperature in °C |
| 4.1 | U01 | 640 | 6.8 | 9356 | 0.3 | 13 |
| 4.2 | U02 | 500 | 5.4 | 9216 | 0.28 | 16 |
| 4.3 | U03 | 800 | 8.4 | 9516 | 0.38 | 14 |
| 4.4 | U04 | 930 | 9.6 | 9646 | 0.35 | 14 |
| 4.5 | U05 | 1320 | 13.1 | 10036 | 0.79 | 11 |
| 4.6 | U06 | 440 | 4.8 | 9156 | 0.22 | 13 |
| 4.7 | U07 | 550 | 5.9 | 9266 | 0.26 | 16 |
| 4.8 | U08 | 440 | 4.8 | 9156 | 0.41 | 15 |
| 4.9 | U09 | 700 | 7.4 | 9416 | 0.11 | 21 |
| 4.10 | U10 | 550 | 5.9 | 9266 | 0.34 | 24 |
| 4.11 | U02/U09 | 550/250 | 8.4 | 9516 | 0.34 | 15 |
| 4.12 | U03/U10 | 750/150 | 9.3 | 9616 | 0.44 | 17 |
| 4.13# | C1 | 850 | 8.9 | 9566 | 0 | 12 |
| 4.14# | C2 | 850 | 8.9 | 9566 | 0 | 11 |
| 4.15# | None | 0 | 0 | 8716 | 0 | 30 |

| | | | | | | |
|---|---|---|---|---|---|---|
| *m*ₛ is the total mass of solids in the coating composition, *m*(U) is the mass of the additive (solid urethane additive U1 to U10, comparative additive C1or C2, not including solvent) *n*(-O-CO-NH-) is the amount of substance of urethane groups contributed by the additives # comparative example | | | | | | |

The following results have been found when coating untreated (blank) and zinc-phosphated steel. A coating film having a dry thickness of 0.010 mm after drying for ten minutes at 80 °C was obtained. Tests were made Salt Spray Test (for Scribe and Edge, values in mm) according to DIN EN ISO 9227, and surface quality was inspected visually, with a ranking from 1 (no defects) to 5 (whole surface shows marked defects):

**Table 3 Data for Coating Films on Steel Substrates**

| Example | Additive | Blank Steel | | | Zn phosphated Steel | | |
|---|---|---|---|---|---|---|---|
| | | Scribe in mm | Edge in mm | Surface | Scribe in mm | Edge in mm | Surface |
| 4.1 | U1 | 2 | 10 | 1 ... 2 | 0.5 | 3 | 1 |
| 4.2 | U2 | 2 | 11 | 2 | 0.5 | 3 | 1 |
| 4.3 | U3 | 1.5 | 8 | 1 ... 2 | 0.5 | 2 | 1 |
| 4.4 | U4 | 2 | 10 | 1 | 1 | 2 | 1 |
| 4.5 | U5 | 2.5 | 12 | 1 ... 2* | 1.5 | 2 | 2 |
| 4.6 | U6 | 3 | 14 | 2 | 1 | 5 | 1 ... 2 |
| 4.7 | U7 | 3 | 14 | 2 | 1 | 4 | 1 ... 2 |
| 4.8 | U8 | 2.5 | 13 | 1 ... 2 | 1.5 | 3 | 1 ... 2 |
| 4.9 | U9 | 3 | 11 | 2 | 1 | 2 | 1 ... 2 |
| 4.10 | U10 | 2.5 | 12 | 2...3 | 1.5 | 4 | 1 ... 2 |
| 4.11 | U2/U9 | 1.5 | 9 | 2 | 1 | 2 | 1 |
| 4.12 | U3/U10 | 2 | 12 | 1 ... 2 | 1 | 4 | 1 |
| 4.13# | C1 | 6 | 36 | 3 | 2.5 | 13 | 3 |
| 4.14# | C2 | 5 | 32 | 3 | 1 | 10 | 3 |
| 4.15# | None | 5 | 40 | 4 | 2 | 16 | 3 |

| | | | | | | | |
|---|---|---|---|---|---|---|---|
| 1 ... 2: value lies between 1 and 2 * surface is sticky | | | | | | | |

It can be seen from these results that the admixture of a urethane additive has a beneficial effect on corrosion resistance and surface quality. No decisive influence has been found whether a polyester or a polyether structure is comprised in the urethane. Slightly better values, however, have been found when a branched polyester triol (PE) was used as constituent compound in the urethane additive. The presence of urethane groups has a markedly stronger effect on the improvement of both corrosion resistance and surface quality, as can be seen from the comparison with the comparative additives C1 and C2 which are hydroxy-functional polyester or polyether.

Inspection of the coated steel sheets, both from blank steel and Zn-phosphated steel, where binders according to the invention were used has revealed that the surface coated with paints prepared from these does not show any swirls or micro-pinholes (ranking of less than 3 in surface quality), which defects have, however, been found in paints of identical composition where no urethane additives were present (ranking of 3 or higher).

## Claims

1. Cationic water-dilutable binders comprising
- a component **B** which is a water-soluble bismuth salt or a water-soluble bismuth chelate complex,
- a urethane additive **U** which has at least two urethane groups >N-CO-O- in its molecule, and optionally has further functional groups in its molecule which are selected from the group consisting of hydroxyl groups, and carboxyl groups, and
- chain-extended epoxy-amine adduct **EA**,
wherein the chain-extended epoxy-amine adduct **EA** optionally comprises moieties derived from epoxide compounds **E1** having on average at least one, and less than two, epoxide groups per molecule, and
wherein the chain-extended epoxy-amine adduct **EA** mandatorily comprises moieties derived from
- epoxide compounds **E2** having at least two epoxide groups per molecule,
- low molar mass epoxide compounds **E3** having two epoxide groups per molecule, and a molar mass of from 170 g/mol to 800 g/mol,
and one or more of
- amidoamines **A41** having at least one amide group and at least one amino group, made from amines **A1** having at least two amino groups per molecule, and from three to twenty carbon atoms, selected from the group consisting of at least two primary amino groups per molecule, at least one primary and at least one secondary amino group per molecule, and at least two secondary amino groups per molecule, and a fatty acid **A4** which has from six to thirty carbon atoms and optionally, at least one olefinic unsaturation per molecule,
- amines **A1** having at least two amino groups per molecule, and from three to twenty carbon atoms, selected from the group consisting of at least two primary amino groups per molecule, at least one primary and at least one secondary amino group per molecule, and at least two secondary amino groups per molecule,
- amines **A2** which have from three to twenty carbon atoms and at least one secondary amino group per molecule, and optionally, at least one further reactive group which are preferably hydroxyl groups,
- amines **A3** having from four to twenty carbon atoms and at least one tertiary, and at least one primary amino group per molecule,
- fatty acids **A4** having from six to thirty carbon atoms, and one carboxylic acid group, or mixtures of two or more of such fatty acids, whereto optionally, an amount of up to 60 % of the mass of fatty acids **A4**, of a dicarboxylic or higher functional acid **A4**' may be added, which higher functional acids **A4**' are preferentially dimeric fatty acids, and
- phenolic compounds **A5** having from six to twenty carbon atoms and at least two phenolic hydroxyl groups.

2. The cationic water-dilutable binders of claim 1 wherein moieties derived from amidoamines **A41** are present in the chain-extended epoxy-amine adduct **EA**.

3. The cationic water-dilutable binders of claim 1 or of claim 2 wherein moieties derived from amines **A2** are present in the chain-extended epoxy-amine adduct **EA**.

4. The cationic water-dilutable binders of any of claims 1 to 3 wherein moieties derived from amines **A3** are present in the chain-extended epoxy-amine adduct **EA**.

5. The cationic water-dilutable binders of any of claims 1 to 4 wherein moieties derived from fatty acids **A4** are present in the chain-extended epoxy-amine adduct **EA**.

6. The cationic water-dilutable binders of any of claims 1 to 5 wherein moieties derived from dicarboxylic or higher functional acids **A4**' which are dimeric fatty acids are present in the chain-extended epoxy-amine adduct **EA**.

7. The cationic water-dilutable binders of any of claims 1 to 6 wherein moieties derived from phenolic compounds **A5** are present in the chain-extended epoxy-amine adduct **EA**.

8. The cationic water-dilutable binders of any of claims 1 to 7 wherein the urethane additive **U** has two urethane groups in its molecules, and optionally, at least one functional group selected from the group consisting of hydroxyl groups and carboxyl groups.

9. The cationic water-dilutable binders of any of claims 1 to 8 wherein the bismuth salt **B** has an anion derived from an organic acid which is an aliphatic hydroxycarboxylic acid having at least one hydroxyl group and at least one carboxyl group in its molecule.

10. The cationic water-dilutable binders of any of claims 1 to 8 wherein the bismuth chelate complex **B** comprises a chelate former which is an aminocarboxylate or a hydroxycarboxylate.

11. A process for the preparation of the cationic water-dilutable binder of claim 1 comprising the steps of
- preparing, in step a, a mixture **M1** from one or more of **A41**, **A1, A2**, **A3**, **A4**, and **A5**,
- reacting the mixture **M1** in an optional step b, with an epoxide compound **E1** to reduce the number of epoxide-reactive groups to between 50 % and 90 % of the number of such groups in the mixture **M1** before this reaction step, to yield a mixture **M2**
- adding, in an optional step c, at least one of **A1, A2**, **A3**, **A4**, and **A5** to the mixture **M1** of step a, or to the mixture **M2** of step b, to yield a mixture **M3**,
- diluting, in step d, the mixture **M1** of preceding step a, or the mixture **M2** of preceding step b, or the mixture **M3** of preceding step c, with an inert solvent **S**, and adding an epoxide compound **E2** under heating, wherein the quantity of **E2** is preferably chosen such that the amount of substance *n*(EP;E2) of epoxide groups in **E2** is from 30 % to 70 % of the amount of substance *n*(RG;M1) of epoxide-reactive groups RG comprised in mixture **M1,** or
from 30 % to 70 % of the amount of substance *n*(RG;M2) of epoxide-reactive groups RG comprised in mixture **M2** if optional step b is performed, or
from 30 % to 70 % of the amount of substance *n*(RG;M3) of epoxide-reactive groups RG comprised in mixture **M3** if optional steps b and c are performed,
wherein the epoxide-reactive groups RG are amino groups, acid groups, such as carboxyl groups, thiol groups, and hydroxyl groups, particularly phenolic hydroxyl groups, which are present in the mixtures, and
continuing the reaction until at least 95 % of the epoxide groups in **E2** are consumed, to form an intermediate **I**
- in step e, a solution of the bismuth salt or chelate **B** in deionised water is prepared by heating under stirring, bismuth oxide Bi₂O₃ or a basic bismutyl compound, both individually or collectively referred to as **B1**, with an excess of from 100 % to 700 % of the stoichiometric amount of an organic acid **B2** and/or an organic chelate former **B3**,
- adding, in step f, the solution of the intermediate **I** of step d under stirring to the solution of the bismuth salt or chelate **B** in deionised water to form a dispersion, and
- heating, in step g, after optional addition of further water, the dispersion of step f, and adding an epoxide compound **E3** and reacting the mixture this obtained until all epoxide groups are consumed to form the chain-extended epoxy-amine adduct **EA**,
wherein the urethane additive **U** is added to the solution of the bismuth salt or chelate, **B**, together with the solution of the intermediate **I**, during step f, or separately after step f, or it is added to the solution of the intermediate **I** after step d.

12. The process of claim 11, wherein step b is performed, and the mixture **M1** comprises at least the amidoamine **A41**, and one or both of amines **A2** and **A3**.

13. The process of claim 12, wherein step c is performed, at least one of amines **A1,** fatty acids **A4**, and phenolic compounds **A5** are added to the mixture **M2** to yield the mixture **M3**.

14. The process of claim 11 wherein the urethane additive **U** is added to the solution of the intermediate **I** after step d.

15. A method of use of the cationic water-dilutable binders of claim 1 comprising the steps of
- adding to an aqueous dispersion of the cationic water-dilutable binders of claim 1, paint additives selected from the group consisting of coalescing agents, wetting agents, pigments, and rheology additives, to form an aqueous paint,
- optionally diluting the paint with further water to a mass fraction of solids of about 15 %, to form a diluted aqueous paint,
- applying the said diluted aqueous paint by electrophoretic deposition on electrically conductive substrates such as base metals, or by brushing, roller-coating, curtain-coating, spraying, or dipping, on any substrate, to form a coating film on the said substrates,
- and drying the said coating film at a temperature of from ambient temperature (25 °C) to 160 °C.
